# EUROPÄISCHE PATENTSCHRIFT

(11) **EP 1 722 143 B1**
(45) Veröffentlichungstag und Bekanntmachung des Hinweises auf die Patenterteilung: **22.10.2008**
(21) Anmeldenummer: 06009248.3
(22) Anmeldetag: 04.05.2006
(51) Int. Cl.: F16K 47/04, F25B 41/06, G05D 7/01

(54) **Differenzdruckventil**
Differential pressure valve
Soupape à pression différentielle

(30) Priorität: 12.05.2005 DE 102005022776
(43) Veröffentlichungstag der Anmeldung: 15.11.2006
(73) Patentinhaber: Behr GmbH & Co. KG, 70469 Stuttgart (DE)
(72) Erfinder: Wiebelt, Achim, Dr.-Ing., 71711 Steinheim (DE)
(74) Vertreter: Nestler, Jan Hendrik

(56) Entgegenhaltungen:
- EP-A- 1 353 254
- DE-A1- 3 741 120
- US-A- 3 472 275
- US-A- 3 880 399
- US-A- 4 634 095
- PATENT ABSTRACTS OF JAPAN Bd. 007, Nr. 128 (M-220), 3. Juni 1983 (1983-06-03) -& JP 58 046277 A (HIDEKUNI YOKOTA; others: 01), 17. März 1983 (1983-03-17)

## Beschreibung

Die Erfindung betrifft ein Differenzdruckventil (Delta-P-Ventil), insbesondere für ein Expansionsorgan einer Kraftfahrzeugklimaanlage, gemäß dem Oberbegriff des Anspruchs 1.

Ein derartiges Differenzdruckventil ist aus den Druckschriften US 3 472 275 und EP 1 353 254 bekannt.

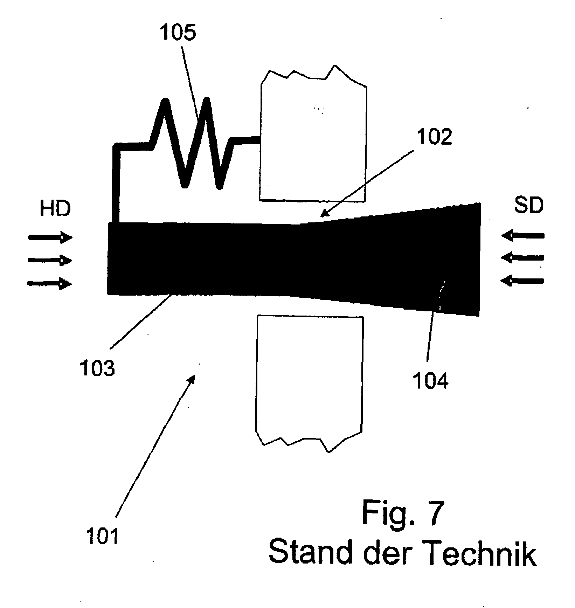

In Fig. 7 ist ein bekanntes Differenzdruckventil 101 als Prinzipskizze dargestellt. Hierbei wird der Durchfluss von Kältemittel durch eine Drosselstelle 102 mit Hilfe eines Ventilstifts 103 mit einem vorliegend konischen Kopf 104 in Verbindung mit einer in der Zeichnung schematisch angedeuteten Feder 105 geregelt. Die Drücke in den durch die Drosselstelle 102 getrennten Räumen oder Strömungskanälen sind durch HD (Hochdruckseite) und SD (Saugdruckseite) bezeichnet, wobei die normale Strömungsrichtung von der Hochdruckseite HD zur Saugdruckseite SD verläuft. Der Kopf 104 ist hierbei saugdruckseitig angeordnet und der Schaft des Ventilstifts 103 durchdringt die Drosselöffnung. Die Feder 105 ist gemäß der Darstellung von Fig. 7 hochdruckseitig angeordnet, jedoch sind auch saugdruckseitige Anordnungen bekannt.

Nachteilig bei diesem bekannten Differenzdruckventil ist, dass ein nahezu linearer Zusammenhang zwischen dem freien Strömungsquerschnitt und der anliegenden Druckdifferenz besteht, welcher nicht in allen Anwendungsfällen erwünscht ist.

Aus der DE 102 19 667 A1 ist ein ferner ein Expansionsventil mit zwei Drosselstellen und einer elektronischen Regelung bekannt, das insbesondere für mit CO₂ als Kältemittel betriebene Fahrzeugklimaanlagen geeignet ist. Das Ventil weist ein Ventilgehäuse mit einer Zuflussöffnung und einer Abflussöffnung, einer elektrisch betätigten Einrichtung zum Verschieben eines Ventilglieds, insbesondere in Öffnungsrichtung, in Bezug auf einen zwischen Zuflussöffnung und Abflussöffnung angeordneten, eine Durchflussöffnung für das Kältemittel aufweisenden Ventilsitz und einer in Gegenrichtung wirkenden Rückstelleinrichtung, insbesondere einer Rückstellfeder, wobei zur Verringerung der Baugröße und des zur Betätigung erforderlichen Stromes zusätzlich zu der von Ventilglied und Ventilsitz gebildeten ersten Drosselstelle mindestens eine weitere, mit der ersten Drosselstelle in Reihe angeordnete Drosselstelle zwischen der Zuflussöffnung und der Abflussöffnung des Expansionsventils vorgesehen ist, deren Durchtrittsquerschnitt gekoppelt mit dem Durchtrittsquerschnitt der ersten Drosselstelle verstellbar ist.

Die Funktionsweise des bekannten Drosselventils ist Folgende:

Bei geschlossenem Expansionsventil, das heißt, bei auf dem Ventilsitz aufsitzendem Kolben ist die als Hauptdrossel wirkende zweite Drosselstelle geschlossen. Die als Vordrossel wirkende erste Drosselstelle zwischen Mündung des Zuflusskanals und Mantelfläche des Kolbens ist dagegen geringfügig geöffnet. Kältemittel hohen Drucks strömt daher durch die Zuflussöffnung und den Zuflusskanal durch die erste Drosselstelle und gelangt in den ersten Kolbenraum. Von hier strömt das Kältemittel über die Drosselbohrung in den zweiten Kolbenraum, Da bei geschlossenem Expansionsventil das Regelventil geschlossen ist, kann das Kältemittel aus dem Kolbenraum nicht abfließen, so dass sich hier bei geschlossenem Expansionsventil der gleiche Druck aufbaut wie im ersten Kolbenraum und vor der zweiten Drosselstelle. Auf der anderen Seite der ersten Drosselstelle, also im Abflusskanal, herrscht niedriger Druck (Saugdruckseite).

Wird nun das Expansionsventil durch Öffnen des Regelventils geöffnet, so fließt Kältemittel aus dem zweiten Kolbenraum über das Regelventil in den Abflusskanal und von dort aus dem Expansionsventil heraus. Auf Grund der Abnahme des Drucks im zweiten Kolbenraum überwiegt der Druck im ersten Kolbenraum. Sobald diese Differenz so groß ist, dass die Kraft der Feder überwunden wird, verschiebt sich der Kolben im Sinne einer Verkleinerung des zweiten Kolbenraums. Das heißt, der Kolben hebt vom Ventilsitz ab und gibt die erste Drosselstelle frei. Nun fließt das Kältemittel über die erste Drosselstelle in den Abflusskanal und aus dem Expansionsventil heraus. Damit ergibt sich ein Druckgefälle zwischen Eingangsdruck (Hochdruckseite) und dem Druck im ersten Kolbenraum, und Ausgangsdruck. Der Druck im zweiten Kolbenraum liegt zwischen dem Druck im ersten Kolbenraum und dem Ausgangsdruck, so dass sich insgesamt ein Druckgefälle ergibt. Diese Druckgefälle wird über das Regelventil kontrolliert.

Ein derartiges Ventil ist relativ kompliziert aufgebaut und lässt noch Wünsche offen, unter anderem in Hinblick auf die Durchflusscharakteristik.

Aus der DE 31 41 358 A1 ist ein Absperr- und Drosselventil mit einem hohen Stellverhältnis bekannt. Gemäß dem zweiten hierin beschriebenen Ausführungsbeispiel ist ein zweistufiges Ventil vorgesehen, wobei der zweistufige Ventilsitz aus einem rohrförmigen Bauteil besteht, an dessen einem Ende ein erster Ventilsitz und an dessen anderem Ende ein zweiter Ventilsitz ausgebildet ist, der in das Rohrstück eingepasst ist. Das Stellorgan trägt an seinem freien Ende einen Ventilkörper, der in einer Führungsbuchse eines seitlichen Anschlussstutzens geführt ist. Der erste Ventilsitz wirkt mit einer an dem Ventilkörper ausgebildeten, ersten Kugelfläche zusammen, die sich über ca. 120° erstreckt. Der zweite Ventilsitz hat eine seinen Durchtrittsquerschnitt bestimmende Durchbohrung, die in einer ringförmigen Anlagefläche endet, von welcher eine Verlängerung mit einer gegenüber der Durchbohrung erweiterten Bohrung ausgeht. Am Ventilkörper ist eine zweite Kugelfläche ausgebildet, die sich über einen Winkel von ca. 300° erstreckt; in der geschlossenen Stellung des Ventüs verläuft die Verlängerung über die Mitte der zweiten Kugelfläche hinweg und bestimmt mit dieser zusammen einen Drosselspalt. Die erste und zweite Kugelfläche sind durch ein Übergangsstück verbunden, wobei der ganze Ventilkörper aus einem Stück gebildet sein kann. An die Verlängerung schließt sich ein erweiterter, zwischen den beiden Ventilsitzen ausgebildeter Zwischenraum (Druckkammer) an. Der Durchfluss in Abhängigkeit von der Öffnung des Ventils durch dieses zweistufige Ventü weist keine aprupten Änderungen auf.

Aus der DE 520 987 A ist ein mehrstufiges Tellerventil für kompressible Medien mit Umlenkungen in Zwischenräumen bekannt, bei dem in der Schließstellung des Ventils eine Überdeckung, in der ersten Phase der Eröffnung eine Drosselzone und in der Offenstellung einen ununterbrochenen, energievermindemden Strömungsweg vorgesehen ist, wobei die Strömungsenergie im geöffneten Zustand durch mehrfache Ablenkung in dem oder den labyrinthartigen Zwischenräumen vermindert wird. Am Ventilschaft ist hierbei am Ende ein tellerartiger Absperrkörper, der mit einem Ventilsitz zusammenwirken kann, und - entgegen der Strömungsrichtung des Mediums etwas beabstandet hiervon - mindestens eine zylindrische Platte vorgesehen, deren Mantelfläche in der Schließstellung mit einer zylindrischen Bohrung des Ventilgehäuses eine Überdeckung bildet, so dass bei der in der ersten Phase der Eröffnung gedrosselte Durchtritt des strömenden Mediums nicht im Sitzbereich des nachfolgend angeordneten Absperrkörpers, sondern zwischen der Platte und der Bohrung erfolgt. Die freien Strömungsquerschnitte nehmen hierbei in der Strömungsrichtung stetig zu, so dass die Geschwindigkeit des durchströmenden Mediums in der Ventilsitzzone am geringsten ist, also keine Drosselung stattfindet, wodurch der Ventilsitz und der Absperrkörper geschont werden.

Es ist Aufgabe der Erfindung, ein verbessertes Ventil zur Verfügung zu stellen.

Diese Aufgabe wird gelöst durch ein Differenzdruckventil mit den Merkmalen des Anspruchs 1. Vorteilhafte Ausgestaltungen sind Gegenstand der Unteransprüche.

Erfindungsgemäß ist ein Differenzdruckventil vorgesehen, insbesondere für ein Expansionsorgan einer Kraftfahrzeugklimaanlage, zur Regelung eines Durchflusses eines Fluids in Abhängigkeit einer Druckdifferenz, die zwischen der Hochdruckseite und der Saugdruckseite des Differenzdruckventils anliegt, wobei das Differenzdruckventil ein Drosselelement, das den Durchfluss durch eine Drosselstelle regelt, und eine das Drosselelement in Schließrichtung vorspannende Feder aufweist, ein Drosselelement vorgesehen ist, welches sich mindestens über zwei Drosselstellen erstreckt und den Durchfluss des Fluids durch die Drosselstellen, zwischen denen eine Druckkammer ausgebildet ist, regelt. Der effektive Drosselquerschnitt ist hierbei bei großen Druckdifferenzen überproportional größer als bei kleinen Druckdifferenzen, so dass bei maximalem Leistungsbedarf auch ausreichend viel Fluid das Differenzdruckventil durchströmen kann. Dieses Differenzdruckventil verhält sich dabei bei geringen Differenzdrücken entsprechend herkömmlichen Differenzdruckventilen, ermöglicht jedoch bei hohen Druckdifferenzen auf Grund des überproportional großen Strömungsquerschnitts auch eine größere . Kälteleistung. Der Kennlinienverlauf des effektiven Drosselquerschnitts über dem Differenzdruck weist hierbei einen Knick auf, insbesondere bevorzugt bei einem relativ hohen Differenzdruck, insbesondere bevorzugt bei einem Wert von 70 bis 90%, ganz besonders bevorzugt bei 75 bis 85% des bei den gegebenen Betriebsbedingungen maximal auftretenden Differenzdruckes. Dabei ist es nur unwesentlich teurer als herkömmliche Differenzdruckventile. Insbesondere ist es auch möglich das Ventil selbstregelnd auszubilden. D. h., dass Ventil kann sich in Abhängigkeit der an ihm anliegenden Druckdifferenz selbsttätig öffnen und schließen. Es ist also nicht erforderlich, auf eine externe Regelung, die beispielsweise ein Regelventil, ein Pilotventil, einen Stellmotor oder ähnliches steuert, zurückzugreifen. Dies kann entsprechende Kostenvorteile mit sich bringen,

Das Drosselelement ist bevorzugt einstückig ausgebildet. Dies erhöht die Betriebssicherheit auf vorteilhafte Weise.

Beim Drosselelement handelt es sich um eine sich über mindestens zwei Drosselstellen erstreckende Ventilnadel. Diese weist vorzugsweise, zumindest einen Bereich mit sich änderndem Querschnitt, insbesondere zumindest einen konisch ausgebildeten Bereich auf, welcher mit einer Drosselöffnung zusammenwirkt.

Die Feder ist vorzugsweise räumlich zwischen zwei Drosselstellen angeordnet. Dies ermöglicht eine einfache Zentrierung des Drosselelements. Die Feder kann jedoch auch hoch- oder saugdruckseitig angebracht sein.

Zwischen zwei Drosselstellen ist eine Druckkammer ausgebildet. Bevorzugt ist die Feder, welche die Federkraft auf das Drosselelement ausübt, in dieser Druckkammer angeordnet, jedoch kann sie bei entsprechend langer Ausgestaltung des Drosselelements auch außerhalb angeordnet sein.

Dabei kann vorzugsweise das Fluid ausschließlich über die beiden Drosselstellen in oder aus der Druckkammer heraus gelangen- Soll bei Umwälzen des Fluids jedoch stets ein Mindestdurchfluss fest vorgegeben sein, so kann - alternativ zu einer stets vorhandenen, kleinen Öffnung im Bereich der Drosselstellen - auch ein Bypass von entsprechend kleinem Durchmesser und/oder ein hochdruckseitiger Ein- und saugdruckseitiger Auslass mit festem Durchmesser vorgesehen sein.

Bevorzugt weist der Ventilschaft des Drosselelements an einer Stelle, die in jeder Stellung des Drosselelements innerhalb der Druckkammer angeordnet ist, eine Querschnittsvergrößerung, insbesondere bevorzugt einen in radialer Richtung bezüglich der Längserstreckung des Ventilschafts verlaufenden Absatz, auf, wobei die Querschnittsfläche des Ventilschafts an der ersten Drosselstelle kleiner als die Querschnittsfläche des Ventilschafts an der zweiten Drosselstelle ist, und sich der Durchmesser des Ventilschafts von der ersten Drosselstelle zur zweiten Drosselstelle vergrößert. Die Ringfläche unterstützt die Öffnungswirkung entgegen der Schließkraft der Feder bei besonders hohen Druckdifferenzen, so dass die erfindungsgemäße Charakteristik unterstützt werden, d.h. das Differenzdruckventil ermöglicht bei hohen Druckdifferenzen auf Grund des überproportional großen Strömungsquerschnitts auch eine entsprechend große Kälteleistung.

Die Querschnittsvergrößerung beträgt vorzugsweise maximal +50%, insbesondere 10 bis 50%, besonders bevorzugt 20 bis 50%, insbesondere bevorzugt 30 bis 45%, der Stirnfläche des Ventilschafts im Bereich der ersten Drosselstelle.

Im Folgenden wird die Erfindung anhand zweier Ausführungsbeispiele unter Bezugnahme auf die Zeichnung im Einzelnen erläutert. In der Zeichnung zeigen:
- Fig. 1: eine Prinzipskizze eines erfindungsgemäßen Differenzdruckventils gemäß dem ersten Ausführungsbeispiel bei wirksamer erster Drossel,
- Fig. 2: eine Prinzipskizze des Differenzdruckventils von Fig. 1 bei geöffneter erster Drossel,
- Fig. 3: ein Diagramm zur Verdeutlichung der einzelnen Drücke über dem Differenzdruck (Hochdruck - Saugdruck),
- Fig. 4: ein Diagramm des effektiven Drosselquerschnitts über dem Differenzdruck,
- Fig. 5: eine Prinzipskizze eines erfindungsgemäßen Differenzdruckventils gemäß dem zweiten, besonders bevorzugten Ausführungsbeispiel in der geschlossenen Stellung,
- Fig. 6: eine Prinzipskizze des Differenzdruckventils von Fig. 5 in geöffneter Stellung, und
- Fig. 7: eine Prinzipskizze eines herkömmlichen Differenzdruckventils mit einer Drossel.

Ein als Expansionsorgan in einer Kraftfahrzeug-Klimaanlage dienendes Differenzdruckventil 1 weist zur Regelung des Kältemitteldurchflusses (Kältemittel vorliegend R744) eine erste Drosselstelle 2a und eine zweite Drosselstelle 2b auf, wobei beide Drosselstellen 2a und 2b durch bzw. in die entsprechenden Drosselöffnungen oder Ventilsitze ragenden, als Drosselelement dienenden Ventilstift 3 gebildet werden.

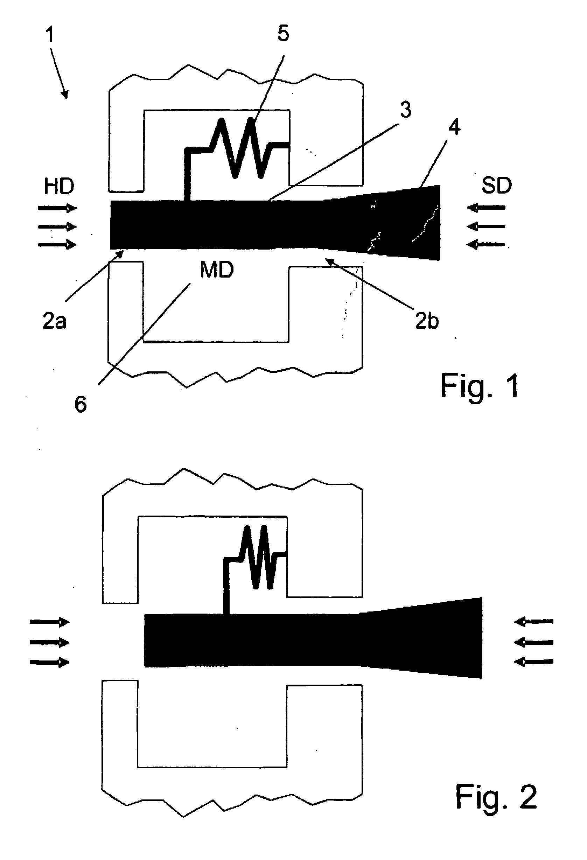

Der Ventilstift 3 ist im Wesentlichen einstückig ausgebildet und weist ein zylindrisches Ende im Bereich der ersten Drosselstelle 2a, so dass ein Ringspalt gebildet wird, und einen konischen Kopf 4 im Bereich der zweiten Drosselstelle 2b, so dass ein dem herkömmlichen variablen Ventil entsprechender Spalt gebildet wird, auf. Am Schaft des Ventilstifts 3 ist in einem Bereich zwischen den beiden Drosselstellen 2a, 2b eine Feder 5 mit ihrem einen Ende angebracht, welche eine Schließkraft auf den Ventilstift 3 ausübt, so dass bei fehlender oder geringer Druckdifferenz zumindest die zweite Drosselöffnung durch den Ventilstift 3 in Folge einer zumindest im Wesentlichen fluiddichten Anlage des entsprechenden konischen Bereiches des Ventilstifts 3 an den Ventilsitze geschlossen ist (vgl. stark schematisierte Darstellung von Fig. 1). Im geschlossenen Zustand des Differenzdruckventils 1 ragt somit der Ventilstififi 3 mit seinem dem Kopf 4 gegenüberliegenden zylinderförmigen Ende in die erste Drosselöffnung unter Bildung eines kleinen Ringspalts hinein, und der konische Bereich des Kopfes 4 liegt an der zweiten Drosselöffnung an.

Zwischen den beiden Drosselstellen 2a und 2b ist eine Druckkammer 6 ausgebildet, in welcher auch die Feder 5 angeordnet ist, welche den Ventilstift 3 zentriert und in Schließrichtung vorspannt. Auf die Druckkammer 6 wird im Folgenden auf Grund des hierin in der Regel herrschenden mittleren Drucks, verglichen mit dem hochdruckseitigen und saugdruckseitigen Druck, auch als Mitteldruckseite MD Bezug genommen.

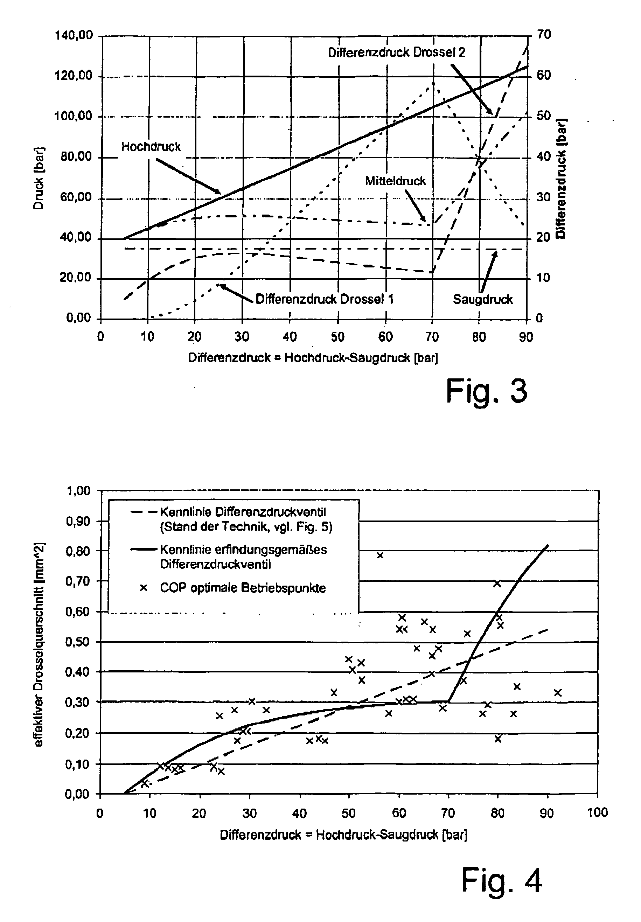

Auf Grund der Schließkraft der Feder 5 ergeben sich bei konstantem Saugdruck auf der Saugdruckseite SD und ansteigendem Hochdruck auf der Hochdruckseite HD die in Fig. 3 dargestellten Differenzdrücke, wobei der Differenzdruck zwischen Hochdruckseite HD und Mitteldruckseite MD als Differenzdruck Drossel 1 und der Differenzdruck zwischen Mitteldruckseite MD und Saugdruckseite SD als Differenzdruck Drossel 2 bezeichnet ist.

Wie zuvor erwähnt, schließt die Feder 5 im Stillstand die zweite Drosselstelle 2b vollständig, während die erste Drosselstelle 2a leicht geöffnet ist, so dass der Druck in der Druckkammer 6 dem hochdruckseitigen Druck entspricht.

Steigt bei Betrieb die Druckdifferenz zwischen Saugdruckseite SD und Hochdruckseite HD, so verschiebt sich der Ventilstift 3 entgegen der Federkraft in Richtung Saugdruckseite SD und die zweite Drosselstelle 2b öffnet sich allmählich. Da jedoch bei relativ geringer Druckdifferenz der freigegebene Strömungsquerschnitt der zweiten Drosselstelle 2b kleiner ist als derjenige der ersten Drosselstelle 2a, ist der Druck in der Druckkammer 6 näher am hochdruckseitig herrschenden Druck als am saugdruckseitigen Druck.

Mit weiter steigender Druckdifferenz übersteigt der freigegebene Strömungsquerschnitt der zweiten Drosselstelle 2b allmählich den freigegebenen Strömungsquerschnitt der ersten Drosselstelle 2a, wodurch der Druck in der Druckkammer 6 stagniert oder gar leicht abfällt.

Bei einer hohen Druckdifferenz ist der Ventilstift 3 so weit zur Saugdruckseite SD verschoben, dass die erste Drosselstelle 2a nahezu schlagartig einen deutlich größeren Strömungsquerschnitt freigibt, da das zylinderförmige Ende des Ventilstifts 3 die Drosselöffnung verlassen hat. Der Druck in der Druckkammer 6 steigt dann schlagartig an, was zur Folge hat, dass der Kältemittelstrom des gesamten Ventils ebenfalls stark ansteigt.

Wie aus Fig. 3 ersichtlich ist, stellt sich der Mitteldruck in der Druckkammer 6 in einem Bereich zwischen dem eingangsseitigen Hochdruck und dem ausgangsseitigen Saugdruck ein, wobei der Druckverlauf stark von dem Fluiddurchfluss abhängt, so dass er vorliegend in einem Bereich bis ca. 70 bar Druckdifferenz zwischen Hochdruckseite HD und Saugdruckseite SD etwa konstant ist, anschließend aber linear stark ansteigt - im Vergleich zum Anstieg auf der Hochdruckseite HD bei konstantem Druck auf der Saugdruckseite SD deutlich steiler. Entsprechend weisen die Verläufe der Differenzdrücke Drossel 1 und 2 bei etwa 70 bar Differenzdruck zwischen Hochdruckseite HD und Saugdruckseite SD ebenfalls einen Knick auf, wobei der Differenzdruck Drossel 1 danach stark abfällt, während der Differenzdruck Drossel 2 stark ansteigt. Üblich sind in diesem Zusammenhang Werte zwischen 50 bar und 80 bar, insbesondere 50, 55, 60, 65, 70, 75 und 80 bar.

Entsprechend dem (Gesamt-)Differenzdruck ergibt sich für den effektiven Drosselquerschnitt ein nichtlinearer Verlauf, wie aus Fig. 4 zu entnehmen ist. Vielmehr vergrößert sich der Drosselquerschnitt ab etwa 70 bar Differenzdruck in Abhängigkeit von dem Differenzdruck deutlich stärker als zuvor (Knick in der Kennlinie). Diese Charakteristik ermöglicht bei hohem Bedarf an Kältemitteldurchsatz, also im Hochlastbetrieb, eine deutlich verbesserte Kälteleistung. In Fig. 4 sind ferner eine Vielzahl optimaler Betriebspunkte (COP = Coefficient of performance) durch Kreuze dargestellt. Wie aus dem Verlauf der Kennlinie ersichtlich, liegt diese im entsprechenden Bereich.

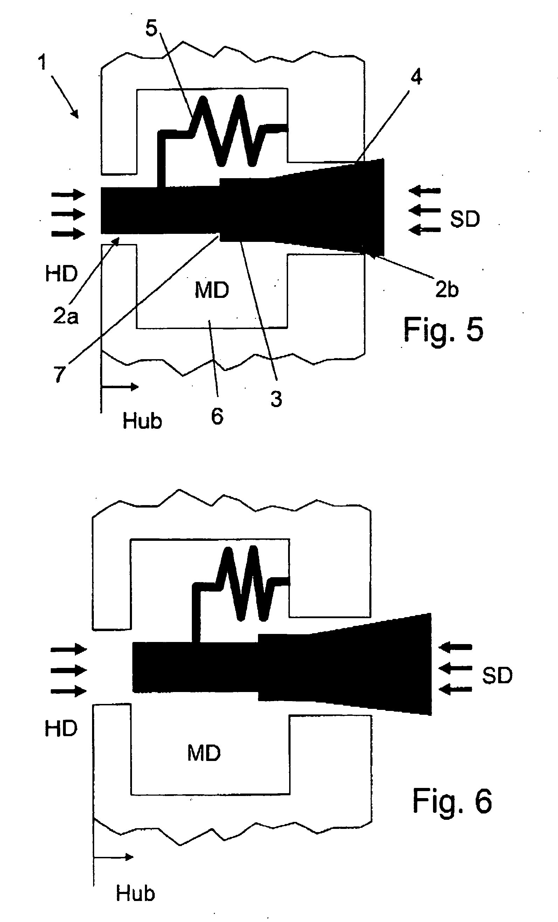

Gemäß dem zweiten, in den Figuren 5 und 6 dargestellten Ausführungsbeispiel ist ein als Expansionsorgan in einer Kraftfahrzeug-Klimaanlage dienendes Differenzdruckventil 1 zur Regelung des Kältemitteldurchflusses (Kältemittel vorliegend R744) vorgesehen, welches - entsprechend dem ersten Ausführungsbeispiel - eine erste Drosselstelle 2a und eine zweite Drosselstelle 2b aufweist, wobei beide Drosselstellen 2a und 2b durch bzw. in die entsprechenden Drosselöffnungen oder Ventilsitze ragenden, als Drosselelement dienenden, durch eine Feder 5 in Schließrichtung vorgespannten Ventilstift 3 gebildet werden. Die in den Figuren 3 und 4 dargestellten Kennlinien gelten annähernd, d.h. abgesehen von sehr geringen Abweichungen, auch für das zweite Ausführungsbeispiel.

Im Unterschied zum ersten Ausführungsbeispiel weist der Ventilstift 3, im geschlossenen Zustand etwa mittig in der Druckkammer 6 angeordnet, eine Querschnittsvergrößerung 7 auf, wobei die in Richtung der Hochdruckseite HD weisende Ringfläche vorliegend etwas kleiner als die kreisförmige Endfläche des Ventilstifts 3 auf der Hochdruckseite HD ist. Diese Ringfläche dient aus zusätzliche Schubfläche, um die Öffnungswirkung des Fluidstroms entgegen der Federkraft der Feder 5 zu vergrößern und wird nur im sogenannten "Boost-Bereich", also wenn der Druck in der Druckkammer 6 (in Fig. 3 als Mitteldruck bezeichnet) viel größer als der Druck auf der Saugdruckseite SD (in Fig. 3 als Saugdruck bezeichnet) ist, also bei sehr großen (Gesamt-) Druckdifferenzen. Die Saugdruckseite des Ventilstifts 3 ist entsprechend dem ersten Ausführungsbeispiel konisch ausgebildet.

## Patentansprüche

1. Differenzdruckventil, insbesondere für ein Expansionsorgan einer Kraftfahrzeugklimaanlage, zur Regelung eines Durchflusses eines Fluids in Abhängigkeit einer Druckdifferenz, die zwischen der Hochdruckseite (HD) und der Saugdruckseite (SD) des Differenzdruckventils (1) anliegt, wobei das Differenzdruckvontil ein Drosselelement (3), das den Durchfluss durch eine Drosselstelle (2a, 2b) regelt, und eine das Drosselelement (3) in Schließrichtung vorspannende Feder (5) aufweist, wobei das Drosselelement (3) derart ausgebildet ist, dass es sich über mindestens zwei Drosselstellen (2a, 2b) erstreckt und den Durchfluss des Fluids durch die Drosselstellen (2a, 2b), zwischen denen eine Druckkammer (6) ausgebildet ist, regelt, **dadurch gekennzeichnet, dass** das Drosselelement (3) eine sich über mindestens zwei Drosselstellen (2a, 2b) erstreckende Ventilnadel ist und der effektive Drosseiquerschnitt bei großen Druckdifferenzen überproportional größer als bei kleinen Druckdifferenzen ist.

2. Differenzdruckventil nach Anspruch 1, **dadurch gekennzeichnet, dass** die Kennlinie des effektiven Drosselquerschnitts über dem Differenzdruck zwischen Hochdruck (HD) und Saugdruck (SD) einen Knick aufweist.

3. Differenzdruckventil nach einem der vorhergehenden Ansprüche, **dadurch gekennzeichnet, dass** das Drosselelement (3) zumindest einen Bereich (4) mit sich ändernden Querschnitt, insbesondere zumindest einen konisch ausgebildeten Bereich (4) aufweist.

4. Differenzdruckventil nach einem der vorhergehenden Ansprüche, **dadurch gekennzeichnet, dass** zumindest ein Ende des Drosselelements (3) zylinderförmig ausgebildet ist und zusammen mit einer kreisförmigen Drosselöffnung eine der beiden Drosselstellen (2a) bildet, wobei der Außendurchmesser des Drosselelements (3) im Bereich der Drosselöffnung kleiner als der Innendurchmesser der Drosselöffnung ist, so dass auch im geschlossenen Zustand des Differenzdruckventils (1) stets ein Ringspalt im Bereich der Drosselstelle (2a) offen ist.

5. Differenzdruckventil nach einem der vorhergehenden Ansprüche, **dadurch gekennzeichnet, dass** der Ventilschaft des Drosselelements (3) an einer Stelle, die in jeder Stellung des Drosselelements (3) innerhalb der Druckkammer (6) angeordnet ist, eine Querschnittsvergrößerung (7), insbesondere einen in radialer Richtung bezüglich der Längserstreckung des Ventilschafts verlaufenden Absatz, aufweist, wobei die Querschnittsfläche des Ventilschafts an der ersten Drosselstelle (2a) kleiner als die Querschnittsfläche des Ventilschafts an der zweiten Drosselstelle (2b) ist, und sich der Durchmesser des Ventilschafts von der ersten Drosselstelle (2) zur zweiten Drosselstelle (2b) vergrößert.

6. Differenzdruckventil nach Anspruch 5, **dadurch gekennzeichnet, dass** die Querschnittsvergrößerung (7) maximal +50% der Stirnfläche des Ventilschafts im Bereich der ersten Drosselstelle (2a) beträgt.

7. Differenzdruckventil nach einem der vorhergehenden Ansprüche, **dadurch gekennzeichnet, dass** die Feder (5) räumlich zwischen zwei Drosselstellen (2a, 2b) angeordnet ist.

8. Differenzdruckventil nach Anspruch 7, **dadurch gekennzeichnet, dass** das Fluid ausschließlich über die beiden Drosselstellen (2a, 2b) in oder aus der Druckkammer heraus gelangen kann.

9. Verwendung eines Differenzdruckventil nach einem der vorhergehenden Ansprüche als Expansionsorgan einer Kraftfahrzeug-Klimaanlage.

## Claims

1. Differential pressure valve, in particular for an expansion vessel of a motor vehicle air conditioning system, for regulating a flow of a fluid dependent on a pressure differential prevailing between the high pressure side (HD) and the intake pressure side (SD) of the differential pressure valve (1), the differential pressure valve having a throttle element (3) which regulates the flow through a throttle point (2a, 2b), and a spring (5) which pre-tensions the throttle element (3) in the direction of closing, the throttle element (3) being designed such that it extends over at least two throttle points (2a, 2b) and regulates the flow of the fluid through the throttle points (2a, 2b) between which a pressure chamber is formed,
**characterised in that**
the throttle element (3) is a valve needle which extends over at least two throttle points (2a, 2b) and the effective throttle cross-section at high pressure differentials is superproportionally greater than at low pressure differentials.

2. Pressure differential valve in accordance with claim 1,
**characterised in that**
the characteristic line of the effective throttle cross-section over the differential pressure between high pressure (HD) and intake pressure (SD) has a kink.

3. Pressure differential valve in accordance with one of the preceding claims,
**characterised in that**
the throttle element (3) has at least one area (4) of varying cross-section, in particular at least one conically shaped area (4).

4. Pressure differential valve in accordance with one of the preceding claims,
**characterised in that**
at least one end of the throttle element (3) is cylindrical in shape and together with a circular throttle opening forms one of the two throttle points (2a), the outer diameter of the throttle element (3) in the area of the throttle opening being less than the internal diameter of the throttle opening such that an annular gap is always open in the area of the throttle appoint (2a) even when the differential pressure valve (1) is closed.

5. Pressure differential valve in accordance with one of the preceding claims,
**characterised in that**
the valve shaft of the throttle element (3) at a point positioned inside the pressure chamber (6) whatever the position of the throttle element (3) has an enlarged cross-section (7), in particular a shoulder which runs radially in relation to the length of the valve shaft, the cross-sectional area of the valve shaft at the first throttle point (2a) being less than the cross-sectional area of the valve shaft at the second throttle point (2b), and the diameter of the valve shaft increasing from the first throttle point (2) to the second throttle point (2b).

6. Pressure differential valve in accordance with claim 5,
**characterised in that**
the enlarged cross-section (7) is no more than +50% of the end face of the valve shaft in the area of the first throttle point (2a).

7. Pressure differential valve in accordance with one of the preceding claims,
**characterised in that**
the spring (5) is positioned spatially between two throttle points (2a, 2b).

8. Pressure differential valve in accordance with claim 7,
**characterised in that**
the fluid is only able to enter or leave the pressure chamber through the two throttle points (2a, 2b).

9. Use of a pressure differential valve in accordance with one of the preceding claims as an expansion vessel in a motor vehicle air conditioning system.

## Revendications

1. Soupape à pression différentielle, en particulier pour un détendeur d'un système de climatisation d'un véhicule, servant à la régulation du débit d'un fluide en fonction d'une pression différentielle qui s'applique entre le côté haute pression (HD) et le côté pression d'aspiration (SD) de la soupape à pression différentielle (1), où la soupape à pression différentielle présente un élément d'étranglement (3) qui régule le débit à travers un point d'étranglement (2a, 2b), et un ressort (5) précontraignant l'élément d'étranglement (3), dans la direction de fermeture, où l'élément d'étranglement (3) est conçu de manière telle, qu'il s'étende sur au moins deux points d'étranglement (2a, 2b), et régule le débit du fluide à travers les points d'étranglement (2a, 2b) entre lesquels est configurée une chambre de pression (6),
**caractérisée en ce que** l'élément d'étranglement (3) est une aiguille de soupape s'étendant sur au moins deux points d'étranglement (2a, 2b), et la section d'étranglement effective, dans le cas de pressions différentielles élevées, est, de façon disproportionnée, plus grande que dans le cas de faibles pressions différentielles.

2. Soupape à pression différentielle selon la revendication 1, **caractérisée en ce que** la courbe caractéristique de la section d'étranglement effective présente, sur la pression différentielle, un coude entre la haute pression (HD) et la pression d'aspiration (SD).

3. Soupape à pression différentielle selon l'une ou l'autre des revendications précédentes, **caractérisée en ce que** l'élément à étranglement (3) présente au moins une zone (4) à section se modifiant, en particulier au moins une zone (4) configurée de façon conique.

4. Soupape à pression différentielle selon l'une quelconque des revendications précédentes, **caractérisée en ce qu'**au moins une extrémité de l'élément d'étranglement (3) est configurée en forme de cylindre et forme, avec une ouverture d'étranglement de forme circulaire, l'un des deux points d'étranglement (2a), où le diamètre extérieur de l'élément d'étranglement (3), dans la zone de l'ouverture d'étranglement, est plus petit que le diamètre intérieur de l'ouverture d'étranglement, de sorte que, même lorsque la soupape à pression différentielle (1) est fermée, une fente annulaire est toujours ouverte dans la zone du point d'étranglement (2a).

5. Soupape à pression différentielle selon l'une quelconque des revendications précédentes, **caractérisée en ce que** la tige de soupape de l'élément d'étranglement (3), au niveau d'un emplacement qui, dans chaque position de l'élément d'étranglement (3), est disposé à l'intérieur de la chambre de pression (6), présente une augmentation de section (7), en particulier un épaulement s'étendant dans la direction radiale par rapport à la dimension longitudinale de la tige de soupape, où la surface de section de la tige de soupape, au niveau du premier point d'étranglement (2a), est plus petite que la surface de section de la tige de soupape au niveau du deuxième point d'étranglement (2b), et le diamètre de la tige de soupape augmente en passant du premier point d'étranglement (2a), au deuxième point d'étranglement (2b).

6. Soupape à pression différentielle selon la revendication 5, **caractérisée en ce que** l'augmentation (7) de la section est égale, dans la zone du premier point d'étranglement (2a), au maximum à + 50 % de la surface frontale de la tige de soupape.

7. Soupape à pression différentielle selon l'une quelconque des revendications précédentes, **caractérisée en ce que** le ressort (5) est disposé, dans l'espace, entre deux points d'étranglement (2a, 2b).

8. Soupape à pression différentielle selon la revendication 7, **caractérisée en ce que** le fluide peut parvenir dans la chambre de pression ou sortir de celle-ci, exclusivement par les deux points d'étranglement (2a, 2b).

9. Utilisation d'une soupape à pression différentielle selon l'une quelconque des revendications précédentes, comme détendeur d'un système de climatisation d'un véhicule automobile.
